# EUROPEAN PATENT APPLICATION

(11) **EP 4 835 780 A1**
(43) Date of publication of application: **04.11.2026**
(21) Application number: 24910279.9
(22) Date of filing: 31.10.2024
(51) Int. Cl.: G06Q 20/22

(54) **RESOURCE MANAGEMENT METHODS FOR BLOCKCHAIN SYSTEM, AND BLOCKCHAIN NODE AND BLOCKCHAIN SYSTEM**

(30) Priority: 29.12.2023 CN 202311863173
(71) Applicant: Ant Blockchain Technology (Shanghai) Co., Ltd., Shanghai 200010 (CN)
(72) Inventor: ZHUO, Haizhen, Shanghai 200010 (CN); HU, Wenbo, Shanghai 200010 (CN); ZHOU, Chenhui, Shanghai 200010 (CN); LI, Yuwen, Shanghai 200010 (CN); WEI, Changzheng, Shanghai 200010 (CN); YAN, Ying, Shanghai 200010 (CN); ZHANG, Hui, Shanghai 200010 (CN)
(74) Representative: Fish & Richardson P.C.
(86) International application number: PCT/CN2024/128768
(87) International publication number: WO 2025/139341

(57) **Abstract**

This specification provides a blockchain system resource management method, including the following: A first blockchain system receives a first transaction initiated by a first account; the first blockchain system executes the bridge contract based on the first transaction, to generate a resource distribution event, where the resource distribution event includes the first account, the N rollup modes, and the resource distribution shares corresponding to the N rollup modes; the second blockchain system generates N sub-transactions based on the resource distribution event; and the second blockchain system executes the i^{th} sub-transaction, to determine an i^{th} first sub-account belonging to the i^{th} rollup mode and corresponding to the first account, and deposit a second target resource in the i^{th} first sub-account based on the resource distribution share corresponding to the i^{th} rollup mode.

## Description

### CROSS-REFERENCE TO RELATED APPLICATIONS

This application claims priority to Chinese Patent Application No. 202311863173.1, filed with the China National Intellectual Property Administration on December 29, 2023, and entitled "BLOCKCHAIN SYSTEM RESOURCE MANAGEMENT METHOD, BLOCKCHAIN NODE, AND BLOCKCHAIN SYSTEM", which is incorporated herein by reference in its entirety.

### TECHNICAL FIELD

This specification relates to the field of blockchain technologies, and in particular, relate to a blockchain system resource management method, a blockchain node, and a blockchain system.

### BACKGROUND

A blockchain system implements computer technologies such as distributed data storage, peer-to-peer transmission, consensus mechanisms, and encryption algorithms. In the blockchain system, data blocks are sequentially linked together to form a chain data structure, and a distributed ledger is cryptographically guaranteed to be immutable and unforgeable. Due to its decentralized, immutable, and autonomous characteristics, the blockchain system is receiving increasing attention and application.

### SUMMARY

This specification provides a blockchain system resource management method, a blockchain node, and a blockchain system.

According to a first aspect, a blockchain system resource management method is provided. The method includes the following: A first blockchain system receives a first transaction initiated by a first account, where the first transaction is used to call a bridge contract deployed in the first blockchain system, and the first transaction indicates N rollup modes and resource distribution shares corresponding to the N rollup modes. The first blockchain system executes the bridge contract based on the first transaction, to transfer a first target resource to a bridge account based on the resource distribution shares corresponding to the N rollup modes, and generate a resource distribution event, where the resource distribution event includes the first account, the N rollup modes, and the resource distribution shares corresponding to the N rollup modes. The second blockchain system generates N sub-transactions based on the resource distribution event, where any i^{th} sub-transaction includes the first account, an i^{th} rollup mode in the N rollup modes, and a resource distribution share corresponding to the i^{th} rollup mode. The second blockchain system executes the i^{th} sub-transaction, to determine an i^{th} first sub-account belonging to the i^{th} rollup mode and corresponding to the first account, and deposit a second target resource in the i^{th} first sub-account based on the resource distribution share corresponding to the i^{th} rollup mode.

According to a second aspect, a blockchain system resource management method is provided. The method is performed by a first blockchain system, a bridge contract is deployed in the first blockchain system, and the method includes the following: receiving a first transaction initiated by a first account, where the first transaction is used to call the bridge contract, and the first transaction indicates N rollup modes and resource distribution shares corresponding to the N rollup modes; and executing the bridge contract based on the first transaction, to transfer a first target resource to a bridge account based on the resource distribution shares corresponding to the N rollup modes, and generate a resource distribution event, where the resource distribution event includes the first account, the N rollup modes, and the resource distribution shares corresponding to the N rollup modes, and the resource distribution event is used to support a second blockchain system to generate N sub-transactions; and executing any i^{th} sub-transaction, to determine an i^{th} first sub-account belonging to an i^{th} rollup mode in the N rollup modes and corresponding to the first account, and deposit a second target resource in the i^{th} first sub-account based on the resource distribution share corresponding to the i^{th} rollup mode.

According to a third aspect, a blockchain system resource management method is provided. The method is performed by a second blockchain system, and the method includes the following: obtaining a resource distribution event from a first blockchain system, where a bridge contract is deployed in the first blockchain system, the resource distribution event is generated by the first blockchain system by executing the bridge contract based on a first transaction, the first transaction is initiated by a first account, and the first transaction indicates N rollup modes and resource distribution shares corresponding to the N rollup modes; generating N sub-transactions based on the resource distribution event, where any i^{th} sub-transaction includes the first account, an i^{th} rollup mode in the N rollup modes, and a resource distribution share corresponding to the i^{th} rollup mode; and executing the i^{th} sub-transaction, to determine an i^{th} first sub-account belonging to the i^{th} rollup mode and corresponding to the first account, and deposit a second target resource in the i^{th} first sub-account based on the resource distribution share corresponding to the i^{th} rollup mode.

According to a fourth aspect, a blockchain node in a first blockchain system is provided. A bridge contract is deployed in the first blockchain system, and the blockchain node includes: a transaction receiving unit, configured to receive a first transaction initiated by a first account, where the first transaction is used to call the bridge contract, and the first transaction indicates N rollup modes and resource distribution shares corresponding to the N rollup modes; and a transaction execution unit, configured to execute the bridge contract based on the first transaction, to transfer a first target resource to a bridge account based on the resource distribution shares corresponding to the N rollup modes, and generate a resource distribution event, where the resource distribution event includes the first account, the N rollup modes, and the resource distribution shares corresponding to the N rollup modes, and the resource distribution event is used to support a second blockchain system to generate N sub-transactions; and executing any i^{th} sub-transaction, to determine an i^{th} first sub-account belonging to an i^{th} rollup mode in the N rollup modes and corresponding to the first account, and deposit a second target resource in the i^{th} first sub-account based on the resource distribution share corresponding to the i^{th} rollup mode.

According to a fifth aspect, a second blockchain system is provided, including: a relayer, configured to obtain a resource distribution event from a first blockchain system, where a bridge contract is deployed in the first blockchain system, the resource distribution event is generated by the first blockchain system by executing the bridge contract based on a first transaction, the first transaction is initiated by a first account, and the first transaction indicates N rollup modes and resource distribution shares corresponding to the N rollup modes, where the relayer is further configured to generate N sub-transactions based on the resource distribution event, where any i^{th} sub-transaction includes the first account, an i^{th} rollup mode in the N rollup modes, and a resource distribution share corresponding to the i^{th} rollup mode; and a sequencer, configured to execute the i^{th} sub-transaction, to determine an i^{th} first sub-account belonging to the i^{th} rollup mode and corresponding to the first account, and deposit a second target resource in the i^{th} first sub-account based on the resource distribution share corresponding to the i^{th} rollup mode.

According to a sixth aspect, a computing device is provided, including a memory and a processor. The memory stores executable code, and when executing the executable code, the processor implements the method in the second aspect or the third aspect.

According to a seventh aspect, a computer-readable storage medium is provided. The computer-readable storage medium stores a computer program, and when the computer program is executed in a computing device, the computing device performs the method in the second aspect or the third aspect.

In the technical solutions provided in implementations of this specification, a second blockchain system located in Layer2 supports a plurality of rollup modes. A plurality of sub-accounts of any user in the plurality of modes correspond to a first account of the user in a first blockchain system located in Layer1. The user only needs to initiate a first transaction in the first blockchain system by using the first account, and specifies, in the first transaction, N Rollup modes to which N sub-accounts to which a first target resource needs to be transferred in the second blockchain system belong, and resource distribution shares corresponding to the N Rollup modes, that is, the first blockchain system and the second blockchain system can cooperate with each other to complete corresponding shares of first target resources to the N sub-accounts of the user in the second blockchain system. Because the user only needs to initiate a single first transaction on Layer1 to distribute resources across multiple Layer2 sub-accounts, rather than initiating separate transactions for each rollup mode, the technical solution significantly reduces the gas fees paid by the user. Additionally, executing one consolidated transaction instead of multiple separate transactions decreases the overall computing resource consumption required by the blockchain nodes to process the operations. Further, it facilitates users' secure and convenient management of resources held through multiple accounts belonging to multiple Rollup modes in the second blockchain system located in Layer2, via their registered accounts in the first blockchain system located in Layer1.

### BRIEF DESCRIPTION OF DRAWINGS

To describe technical solutions in implementations of this specification more clearly, the following briefly describes the accompanying drawings used in the description of the implementations. It is clear that the accompanying drawings in the following description show only some implementations recorded in this specification, and a person of ordinary skill in the art can still derive other drawings from these accompanying drawings without creative efforts.
FIG. 1 is a first schematic diagram illustrating a principle of Layer2, according to an implementation.
FIG. 2 is a second schematic diagram illustrating a principle of Layer2, according to an implementation.
FIG. 3 is a third schematic diagram illustrating a principle of Layer2, according to an implementation.
FIG. 4 is a fourth schematic diagram illustrating a principle of Layer2, according to an implementation.
FIG. 5 is a schematic diagram illustrating a process of registering a Rollup mode, according to an implementation.
FIG. 6 is a first flowchart illustrating a blockchain system resource management method, according to an implementation of this specification.
FIG. 7 is a schematic diagram illustrating resource transfer implemented in cooperation between Layer1 and Layer2, according to an implementation.
FIG. 8 is a schematic diagram illustrating a client device of a blockchain system and a transaction initiated by the client device, according to an implementation.
FIG. 9 is a second flowchart illustrating a blockchain system resource management method, according to an implementation of this specification.
FIG. 10 is a third flowchart illustrating a blockchain system resource management method, according to an implementation of this specification.
FIG. 11 is a fourth flowchart illustrating a blockchain system resource management method, according to an implementation of this specification.

### DESCRIPTION OF IMPLEMENTATIONS

To enable a person skilled in the art to better understand the technical solutions of this specification, the following clearly and completely describes the technical solutions in the implementations of this specification with reference to the accompanying drawings. It is clear that the described implementations are only some of the implementations of this specification rather than all of the implementations. All other implementations obtained by a person of ordinary skill in the art based on the implementations of this specification without creative efforts shall fall within the protection scope of this specification.

In a distributed system, there is the typical CAP theorem-consistency, availability, and partition tolerance, which cannot be achieved simultaneously and is referred to as "impossible triangle" for short. There is also an impossible triangle in the blockchain system: efficiency, decentralization, and security. Although "impossible triangle" in the blockchain system here has not been clearly demonstrated, it is a summary of the existing blockchain system. Efficiency, decentralization, and security here are defined as follows: Efficiency: Number of transactions per second, that is, TPS (Transaction per Second). Decentralization: The threshold for participating nodes is low enough to ensure a large number of distributed nodes in the system. Security: It is difficult enough to launch attacks in the blockchain system.

For "impossible triangle" in the blockchain system mentioned above, Ethereum (also referred to as "Mainnet" or "Layer1", where other popular public chain projects like Binance's BSC and TRON also fall under the category of Layer1/Mainnet) prioritizes security and decentralization at the expense of efficiency, currently achieving only about 12 to 15 TPS. Layer1 can become congested when there are a large number of transactions to process, especially when there are many complex transactions. In addition to regular transfer transactions, Layer1 also serves as a major platform for popular applications such as DeFi (decentralized finance) and NFT (non-fungible token), and Layer1 became extremely congested when transactions are booming, resulting in significant transaction delays.

High gas fees (or transaction fees) often become an obstacle to transactions. Although the shift from PoW (Proof of Work) to PoS (Proof of Stake) has changed the way the right to record transactions on the blockchain is obtained, the transaction fees that need to be paid to the nodes that obtain the right to record transactions have not decreased significantly. This is because gas fees are designed to cover the computing costs incurred by nodes executing transactions (including executing smart contract code). In other words, gas fees are directly proportional to the computing resource consumptions required by the nodes to process these operations, Therefore, gas fees will not decrease if these computing costs remain unchanged. For example, a single currency exchange transaction on a decentralized exchange can incur fees exceeding $100 during periods of congestion, deterring many users.

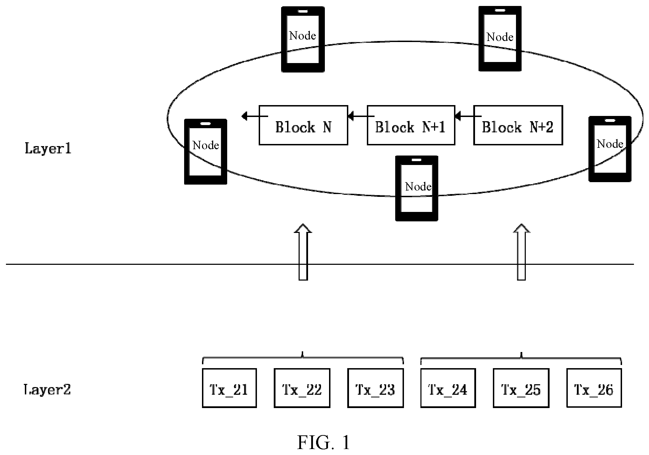

The Layer2 technology is an extended solution built on top of Layer1, designed to address the inefficiencies and high transaction costs of Layer1. As shown in FIG. 1, a transaction can be executed quickly on Layer2, and Layer2 synchronizes a final state back to Layer1 at a certain time. Layer2 is dedicated to providing high-speed transaction processing, while security and decentralization are handled by Layer1. This reduces the pressure on Layer1, significantly lowers the gas fees for executing transactions on Layer2, and also significantly reduces the gas fees needed to synchronize the final state of the transaction executed on Layer2 (rather than all states on Layer2) back to Layer1. The technology of building Layer2 on top of Layer1 actually separates the execution process of a transaction or contract from the storage of its final state. The execution process is placed in Layer2, while Layer1 only needs to store the final state. This design needs to ensure the correctness of the execution process of the transactions or contract on Layer2, and ensure that the state written to Layer1 is consistent with the result of correct execution on Layer2.

Layer2 of Ethereum includes a mechanism named Rollup.

As shown in FIG. 1, the core idea of Rollup is to store credentials that can verify a transaction process on Layer1, while running the transaction process (computation process) and state storage in Layer2. The credentials for the transaction process include states of a set of transactions before execution (Pre-State) and states of the set of transactions after execution (Post-State), as well as the set of transactions. These credentials can be used to verify the correctness of state transitions corresponding to the set of transactions, and can also be used to reconstruct execution processes of all transactions and states of all accounts on Layer2, thereby eliminating security risks arising from data availability on Layer2.

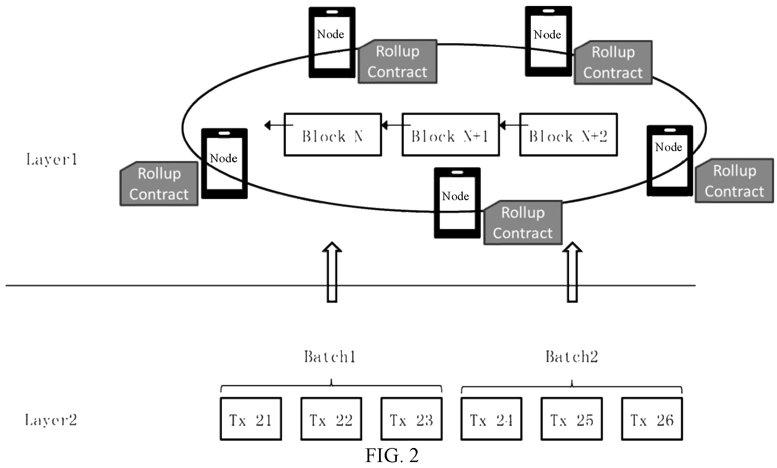

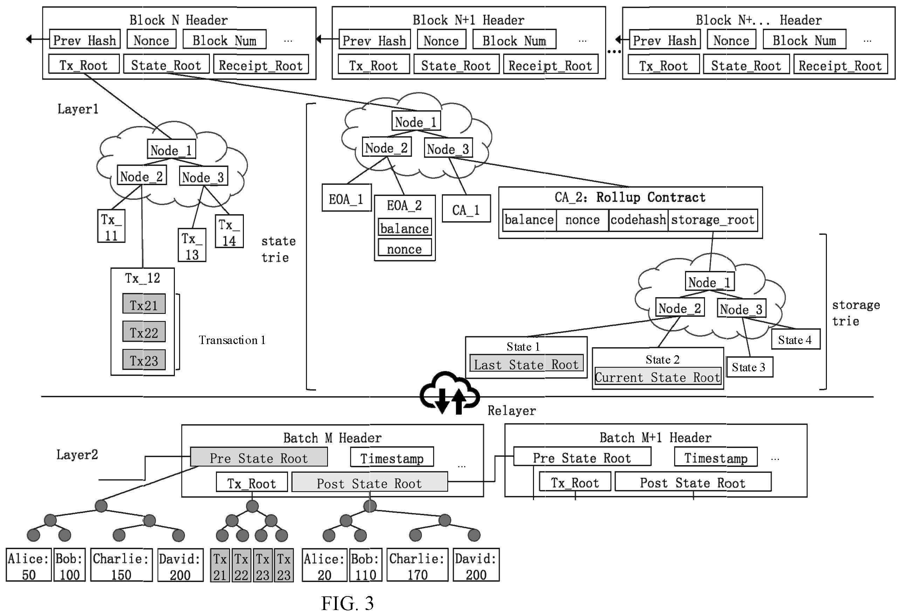

The principle of Rollup can be specifically shown in FIG. 2 and FIG. 3 (FIG. 3 mainly shows OP-Rollup as discussed below).

A transaction that creates a smart contract is sent to Layer1. After consensus is reached on Layer1, each node on Layer1 can execute the transaction, thereby completing deployment of the contract. Specifically, the transaction can be executed by an EVM/WASM of a blockchain node. EVM is a Turing-complete virtual machine, which means that various complex logics can be implemented through it. This is one of the biggest improvements of Ethereum as a representative of blockchain 2.0 compared to blockchain 1.0. Users can publish and call smart contracts in Ethereum, which can then run on the EVM. After the transaction of the deployed smart contract is executed, a contract account corresponding to the smart contract is generated on Layer1. The contract account has an on-chain address and includes a balance (balance), a counter (nonce), a hash value of contract code (Codehash), and a root of contract storage (Storage_Root). Code and account storage of the contract can be saved in the contract account through Codehash and Storage_Root. The behavior of the smart contract is controlled by the contract code, while the account storage of the smart contract stores the state of the contract. In other words, the smart contract makes a virtual account including the contract code and the account storage be generated in the blockchain. Subsequently, the node on Layer1 can receive a transaction request for calling the deployed smart contract, and the transaction request can include an address of the called contract, a function in the called contract, and an input parameter. Generally, after consensus on the transaction request is reached, each node in the blockchain can independently execute the smart contract that is designated to be called.

Storage_root in Ethereum is the hash of a root node of an MPT tree, which organizes the storage of the state of the contract account. MPT stands for Merkle Patricia Tree, which is a tree-like structure that combines Merkle Tree and Patricia Tree (Compressed Prefix Tree, a more space-saving Trie tree, and dictionary tree). The Merkle Tree algorithm calculates a hash value for each transaction, then joins each pair of transactions and calculates the hash again, continuing until the top-level Merkle root is reached. Ethereum uses an improved MPT tree, such as a 16-ary tree structure, which is often simply referred to as an MPT tree. In fact, an Ethereum block header includes roots of three MPT trees: Transaction_Root (abbreviated as Tx_Root), State_Root, and Receipt_Root. State_Root is the hash value of the root of the MPT tree composed of the states of all accounts in the current block. That is, the state trie pointing to the State_Root is formatted as an MPT. A portion of values of each node from a root node to a leaf node in this MPT can be concatenated in sequence to form an account address, which serves as the key. The account information stored in the leaf node is the value corresponding to this account address, forming a key-value pair. The aforementioned key can be sha3(Address), which is the hash value of the account address (the hash algorithm can be, for example, sha3). The stored value can be rlp(Account), which is the rlp (Recursive Length Prefix) code of the account information. The account information is a quaternion composed of [nonce, balance, storageRoot and codeHash]. An externally owned account (EOA) generally has only two fields: nonce and balance, while storageRoot and codeHash fields store empty strings or strings of all zeros by default. That is, the externally owned account does not store contracts or state variables generated after contracts are executed. A contract account includes Nonce, Balance, Storage root, and CodeHash. Account information of both the external account and the contract account is generally located in a separate leaf node (Leaf Node).

Storage_Root of a contract account (CA) in state trie points to another tree that is also in MPT form, which stores data on the state variables (state variable) involved in contract execution. The tree in MPT form to which storage_Root points is Storage Trie, that is, storage_Root stores a hash value of a root node of Storage Trie. Generally, this Storage Trie tree stores a key-value (key-value) pair. The key indicates an address of a state variable, a value thereof can be a result obtained after specific rule processing is performed on a location at which the state variable is declared in the contract (a value counted from 0), for example, sha3(location at which the state variable is declared) or sha3(location at which the contract name + the state variable are declared). The value is used to store a value of the state variable (for example, a value encoded by RLP). A portion of data stored on a path from the root node to the leaf node is linked together to form the key, and the leaf node stores the value. In State trie and its Storage trie, the root node and intermediate nodes, excluding the leaf node, are represented by a cloud-like shape shown in FIG. 3 to depict a flexible and complex structure.

As shown in FIG. 2, Rollup Contract can be deployed on Layer1 in Rollup. In Layer2, initiated transactions can be received, such as Tx_21 and Tx_22 shown in the figure. A batch of transactions is referred to as a transaction group (that is, a Batch), which is executed sequentially and its state is updated as a whole. As shown in FIG. 1 and FIG. 2, Batch 1 is assumed to include three transactions: Tx_21, Tx_22, and Tx_23, and Batch 2 is assumed to include three transactions: Tx_24, Tx_25, and Tx_26. In Layer2, these transactions can be sorted according to a rule, and then these sorted transactions can be executed in sequence, such as sorted by timestamps in the transactions. After transactions in a Batch are executed sequentially, there can be several resulting states. For example, transactions in Batch 1 are the following:
Tx_21: Alice→Bob 20; indicating that Alice transfers 20 units of assets, such as Ether, to Bob;
Tx_22: Alice→Charlie 10; indicating that Alice transfers 10 units of assets, such as Ether, to Charlie;
Tx_23: Bob→Charlie 10; indicating that Bob transfers 10 units of assets, such as Ether, to Charlie.

Before the transactions in Batch 1 are executed, it is assumed that there are a total of four states, referred to as initial states of Batch 1, which are state values locked by Pre State Root in FIG. 3, that is:
Alice: 50, Bob: 100, Charlie: 150, David: 200.

After the transactions in Batch 1 are executed, these four states are updated to final states of Batch 1, which are state values locked by Post State Root in FIG. 3, that is:
Alice: 20, Bob: 110, Charlie: 170, David: 200.

In Layer2, a Merkle tree can be used to organize the states of the transactions in Batch 1 before and after their sequential execution. As shown in FIG. 3, in Layer2, transactions in a Batch and their related state changes can be organized together. For example, a Merkle root obtained by organizing hash values of the transactions in Batch 1 based on the Merkle tree is locked in a header (Header) of the Batch. This header is similar to a block header in Layer1. This Merkle root is Tx_Root in the header of the Batch. Similarly, as described above, the Merkle root, obtained by organizing all the state values of the transactions in Batch 1 before execution based on the Merkle tree, can be locked in the header of the Batch, that is, Pre State Root; the Merkle root, obtained by organizing the hashes of all the state valuesof the transactions in Batch 1 after execution based on the Merkle tree, can be locked in the header of the Batch, that is, Post State Root. For Batch M, a timestamp (Timestamp) can be further set in its header to record generation time of the Batch. Certainly, information about other fields can also be set. For Batch M+1, Pre State Root in its Header is equal to Post State Root in the Header of Batch M, as shown by a line between the two roots in FIG. 3. This creates a chain structure between Batches.

Examples of the Rollup mechanism of Layer2 can include Optimistic-Rollup (OP-Rollup), ZK-Rollup (ZK stands for zero knowledge), TEE-Rollup, and others.

In the OP-Rollup mechanism, Layer2 can be configured to include a receiver, a relayer, and a sequencer (Sequencer) for a transaction pool (Txpool). In the ZK-Rollup and TEE-Rollup mechanisms, Layer2 can also be configured to set up a prover (Prover). For the TEE-Rollup mechanism, the prover (Prover) can be set up in the TEE.

The OP-Rollup mechanism is described below as an example. As shown in FIG. 3, it is assumed that transactions such as Tx21, Tx23, Tx25, Tx22, Tx26, and Tx24 are collected in TxPool. The Sequencer sorts and packages these transactions based on timestamps in these transactions, for example, packages Tx21, Tx22, and Tx23 in Batch M, organizes hash values of these transactions to form Merkle to generate a Merkle Root (that is, a transaction root), and fills the hash values of the Merkle Root into Tx_Root in the generated Batch M Header. Notably, when calculating the root of the Merkle tree, for a case with a value less than 2ⁿ, the last transaction can be assigned multiple times to make up 2ⁿ, calculating the root of the 2-ary Merkle tree. As shown in FIG. 3, Tx23, which is the last in a time sequence, is repeated once to complete four transactions. Even if the number of transactions reaches 2², the root of the 2-ary Merkle tree can be calculated. After sorting the transactions based on their timestamps, the Sequencer packages Tx21, Tx22, and Tx23 in Batch M+1.

Before the execution of the transaction sequences Tx21, Tx22, and Tx23 in Batch M, the states are as described above: Alice: 50, Bob: 100, Charlie: 150, David: 200. The Sequencer can organize these states to form a Merkle tree and store the hash value of the root node of the Merkle tree as the pre state root corresponding to Batch M in the Pre State Root field of the Batch M Header. Further, the Sequencer can execute the three transactions Tx21, Tx22, and Tx23 in sequence, and a result of executing these three transactions generates a new state, as mentioned before: Alice: 20, Bob: 110, Charlie: 170, David: 200. The Sequencer can organize these updated states to form a Merkle tree and store the hash value of the root node of the Merkle tree as the post state root corresponding to Batch M in the Post State Root field of the Batch M Header.

Further, the Sequencer can send transaction 1 that calls Rollup Contract to Layer1 through Relayer. Transaction 1 includes some or all of the fields in the Batch M Header and the compressed transaction sequence Tx21, Tx22, and Tx23. After Tx21, the Tx22, and the Tx23 are compressed, occupied space can be greatly reduced. An interface in the called Rollup Contract can include storing the compressed transaction data (Tx21, Tx22, Tx23) on calldata with a cheaper location (lower gas fees). In Ethereum smart contracts, calldata is a special data location used to store input data called by a function. Specifically, calldata is typically stored directly in Ethereum's transaction data, and generally saves more gas than other data locations (such as memory and storage). Although the process of compressing the transaction sequence included in the compressed transaction batch is omitted in this specification, it can be understood that any transaction Batch mentioned below can include either an uncompressed transaction sequence or a compressed transaction sequence.

Notably, in an Ethereum transaction, a signature portion accounts for about half of the total volume, and its From field can be 0 bytes because the From field can be recovered from the signature. In Rollup, BLS or other schemes can usually be used for aggregation, and the signature of each transaction is compressed to about 0.5 bytes on average. Correspondingly, because the From field of the transaction cannot be recovered from this aggregated signature in the Rollup transaction, it needs to be represented by 4 bytes separately.

The BLS signature scheme was originally proposed in 2001 by Stanford University professor Dan Boneh et al., and is constructed based on bilinear mapping. Generally, a user's control over their own account is manifested in signing a transaction using their private key. A single signature can reach 68 bytes, occupying a significant amount of space. For multiple transactions initiated by multiple accounts, each account needs to sign each of its own transactions separately. Signature aggregation, however, can combine multiple signatures into a single signature, greatly saving byte space needed for signing. Such aggregation can be aggregation of a same message signed by different signers, or aggregation of signatures from different messages. Public key aggregation can combine multiple different public keys into a single master public key. The master public key can be used to verify the aggregated signature, without needing each public key to participate in the computation when verifying the master signature. Generally, signature aggregation can be implemented by using a Schnorr signature algorithm and a BLS signature algorithm. Compared with the Schnorr signature algorithm, the BLS signature algorithm implements a smaller aggregated signature volume, which is about half of the Schnorr.

The above-described compression scheme and the use of BLS for signature aggregation are ideal designs. However, in several actual Rollup schemes, currently, a compressed transaction still occupies 40 to 50 bytes of space, which does not include the signature, that is, BLS signature aggregation has not been adopted.

Following the above-described descriptions, after receiving Transaction 1, which calls Rollup Contract, Layer1 reaches a consensus and executes Transaction 1 on some nodes. Transaction 1 and its execution result, along with other transactions and their execution results, are used to generate a block, as shown in Block N in FIG. 3. Some of the other transactions can include regular transfer transactions and transactions involving other smart contracts. Regular transfer transactions and transactions involving other smart contracts can involve transaction execution. Transactions involving other smart contracts, in particular, can involve more complex execution logic. Transaction 1 here calls the function in Rollup Contract that stores data at the calldata location. This mainly involves storing data at a specified location, that is, does not involve execution of complex contract logic. In other words, a primary function of Rollup Contract in Layer1 is to store specified content from a transaction sent from Layer2 to a designated location, and does not involve complex execution logic. For example, Tx21, Tx22, and Tx23 are stored in Tx_12, which is locked to a transaction tree by Tx_Root in a Block N Header. In addition, in an implementation, Pre State Root and Post State Root in the Batch M Header in transaction 1 can be stored in state 1 and state 2 in contract states on Layer1 respectively through Rollup Contract. As described above, state 1 and state 2 are included in state trie locked by State_Root in Block N Header, for example, in storage trie. To distinguish between state 1 and state 2, state 1 and state 2 in the contract states on Layer1 are referred to as Last State root and Current State root, respectively. In addition, for simplicity, only Current State root in the contract states on Layer1 can be stored, without storing Last State root, as shown in the code example below. In other implementations, Last State root and Current State root can also be stored in calldata of Layer1, just like transactions in Layer2, which will not be elaborated here. For the former, for example, a commitBatch() contract interface in Layer1 is called: function CommitBatch(bytes[] calldata _transactions, bytes32 _preStateRoot, bytes32 _postStateRoot), and the CommitBatch() contract interface can set basic validation logic, which can, for example, include the following: verifying whether Pre State Root in current transaction 1 is equal to Current State Root in contract storage; and if yes, storing a transaction passed in from Layer2 in transaction 1 in calldata, and updating Current State Root in the contract storage to Post State Root.

In the manner described above, OP-Rollup can execute individual transactions in Layer2 and can bundle dozens, hundreds or even more Layer2 transactions in a Batch, while only publishing a minimal amount of information to Layer1. The minimum amount of information includes, as mentioned above, the transactions on the compressed Layer2 and the hash values of the state roots before and after the execution of these transactions. As shown above, sending can be performed here, for example, through a transaction on Layer1, as shown in transaction 1 in FIG. 3. Therefore, this is equivalent to executing a batch of transactions on Layer2 at once, but only one transaction is executed on Layer1. In addition, OP-Rollup does not include any proof. This is based on the assumption that the information submitted on Layer2 is free from fraud or malicious behavior, and therefore referred to as the name "optimistic" (Optimistic). Despite this assumption, in order to prevent and deter such behavior, traders who submit Layer2 information will still need to stake a portion of their Layer1 assets (typically on-chain native tokens, such as Ether on Ethereum) in OP-Rollup Rollup Contract. Although the transactions in Layer2 information submitted to Layer1 are compressed, as mentioned above, the transactions can still be used to reconstruct the execution of all transactions on Layer2 and the states of all accounts, thereby eliminating security risks caused by data availability on Layer2.

While OP-Rollup is optimistic, a challenge period can still be set on Layer1, during which anyone can submit a challenge using a fraud proof. Typical reasons include a challenger proving that a transaction within the Batch is not executed correctly, that is, the execution of the transaction does not produce a correct state. If a transaction in a Batch is proven to be invalid, the Batch is also invalid. The Rollup contract on Layer1 can roll back a Batch chain of Layer2, and the invalid Batch and all subsequent Batches will become orphan blocks. Once fraud proof is successful, a portion of the deposit is paid to the challenger, and the remainder is destroyed. Conversely, if no fraud proof is submitted by the end of the challenge period, the Rollup contract can determine the Batch. Fraud proof is a data validity verification method used in Optimistic Rollup schemes. Currently, fraud proof can be divided into two types: single-round interactive and multi-round interactive.

In one implementation of the single-round interactive fraud proof, a disputed transaction is replayed on Layer1 to check for invalid states before submission. For example, Alice, as a validator, synchronizes OP-Rollup compressed data to Layer1 and pledges collateral. If Bob, as a challenger, disputes the data, he needs to initiate a challenge during the window (challenge period) and pledge collateral. The Rollup Contract of OP-Rollup will recalculate the transactions in the block on Layer1 to determine whether they are right or wrong. The incorrect party's deposit will be forfeited, and the correct party will receive a reward.

Notably, although the calldata on Layer1 includes all the compressed transactions on Layer2, during fraud proof verification, the compressed transactions in Batch M in the calldata are not directly extracted and executed, but are simulated and executed based on texts of all transactions in Batch M passed in by the challenger. This is because the compressed transactions in Batch M in the calldata are generally only used to reconstruct the execution of all transactions on Layer2 and the states of all accounts, thereby eliminating security risks caused by data availability on Layer2; the authenticity of the compressed transactions in Batch M in the calldata without signatures is uncertain, while the transactions passed in by the challenger are complete transactions whose validity can be verified; furthermore, because the initial state cannot be verified, the contract storage only includes state roots rather than states, unless all transactions are reexecuted sequentially from Batch 0 until all states are obtained after Batch M-1 is executed, which is clearly uneconomical and inefficient.

The above-mentioned single-round interactive fraud proof increases an amount of data that needs to be published on the chain and needs re-execution of all transactions in Batch M on Layer1, and replaying these transactions incurs significant gas costs. Therefore, OP-Rollup is shifting towards the multi-round interactive proof to achieve a same goal more efficiently.

In the multi-round interactive fraud proof, when Bob poses a challenge to data synchronized by the Sequencer, the Sequencer needs to divide a disputed Batch range into two equal parts, and return them through a contract interface such as dispute(). Then, Bob further selects a range after the division to continue the challenge, and the Sequencer divides the disputed range into two equal parts again. This cycle continues until the disputed range is reduced to a specific transaction. Here, Bob sends an original text of a challenge transaction (including a signature of each transaction) and a global state before the execution of the transaction. The Sequencer sends a Pre State Root (also referred to as a state commitment) before the execution of the challenge transaction and a Post State Root after the execution of the challenge transaction, for the Rollup Contract of Layer1 to perform calculation and determining. Specifically, for example, the Rollup Contract verifies the global state before the execution of the challenge transaction based on the Pre State Root before the execution of the challenge transaction, executes the challenge transaction based on the global state before the execution of the challenge transaction to generate the state after execution, and generates the Post State Root based on the global state after the execution of the challenge transaction. If the Post State Root is different from that sent by the Sequencer, it means that the challenge is successful; otherwise, the challenge fails. In practice, Arbitrum does not use binary search but rather K-splitting, dividing N instructions into N/K groups each time to search for fraudulent instructions, which is more efficient.

Therefore, compared to the single-round interaction, the multi-round interaction can resolve disputes at a lower cost. For example, the bipartition protocol can reduce the amount of data published on the chain (without publishing state commits for every transaction), and it is also easier to support complex smart contracts and handle more demanding disputes. However, as the number of interactions increases, its dispute window is also longer.

Overall, because the design of OP-Rollup needs all data related to state updates and verification to be placed on Layer1, OP-Rollup has the most limited scalability and throughput improvement, and needs a waiting period of 7 days or even longer. This means that the extraction of assets from OP-Rollup results in a delay, which needs waiting until the window expires.

ZK-Rollup is different from Optimistic Rollup because ZK-Rollup uses zero knowledge (zero knowledge) proof technologies. ZK refers to the ability to prove something (a transaction or state) to another party without disclosing necessary information. In ZK-Rollup, unlike OP-Rollup, Layer2 also generates a proof (proof) for a transaction Batch (for example, using cryptographic proof algorithms such as ZK-SNARK). This proof can demonstrate that the Post State Root is obtained by correctly executing a transaction sequence in the corresponding transaction Batch based on the Pre State Root. This can be confirmed simply by verifying the proof, without needing to re-execute the transactions in the Batch for verification.

The process of generating the proof can be that the Sequencer packages all transactions (including sender, receiver, and amount) in a Batch in Layer2, as well as information such as Pre State Root, Post State Root, and Proving Key before and after the execution of the transactions in the Batch, and sends the information to a prover on Layer2. The prover then converts the information to a special form "witness" (selecting a part as public input and another part as private input). Further, the prover uses a computational circuitry (a specific algorithm) for zero-knowledge proofs arranged within it to verify the validity and correctness of the public input plus the private input. If the verification is correct, the circuit is executed successfully. Otherwise, the circuit is executed unsuccessfully. When the circuit is executed successfully, the prover can output a proof, which is used to prove that the packaged data is valid and correct. In addition, this proof has a small size, which is usually only tens of bytes. The process of generating the proof described above is similar to a process of re-execution and involves a large number of circuit calculations, making it more complex and therefore generally time-consuming. Notably, because the proof itself cannot deduce the private input, only a party that knows a verification key of zk-SNARK can verify the proof encrypted with a corresponding creation key. Public input can be used to verify the validity and correctness of packaged data, but cannot be used to obtain specific content of the packaged data.

Using zero-knowledge proofs, the prover can publish a small proof to Layer1 via the Relayer, which can be quickly verified by the Rollup Contract. The small size of the proof further reduces gas consumption on Layer1. In addition, in ZK-Rollup, the verification process is usually completed automatically by a smart contract, and there is no need to set a window like in OP-Rollup. Asset withdrawal is also faster, which is one of the main differences between OP-Rollup and ZK-Rollup.

The specific verification process involves first inputting common input (which can be calculated from transaction 1 submitted in Block N, for example, by automatic execution calculation logic in the Rollup Contract when transaction 1 is submitted to the Rollup Contract of Layer1), a proof, and a verification key (which can be stored in a governance contract on Layer1 and provided to the Rollup Contract) to verification logic in the smart contract (for example, a verification algorithm of ZK-SNARK). The verification logic then uses the verification algorithm to check whether the proof is valid. If the proof is valid, packaged data corresponding to the common input is considered to be valid and correct. If the verification succeeds, the verification algorithm outputs confirmation information, proving that the packaged data corresponding to the common input is valid and correct; otherwise, the verification algorithm outputs error information, indicating that the data is invalid or erroneous.

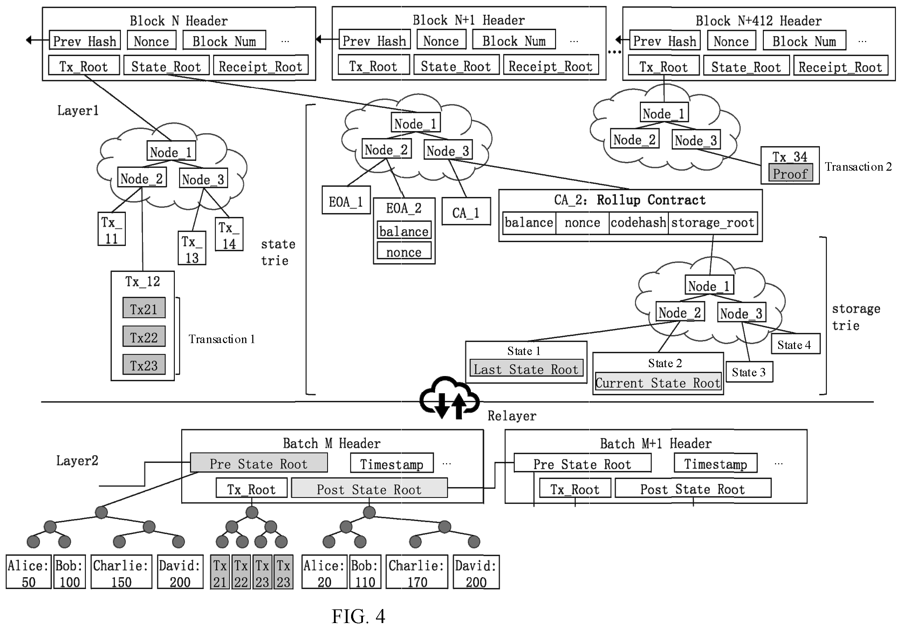

However, zero-knowledge proofs like ZK-SNARKs involve a very large amount of computation in the proof generation process, which means that proof generation will be time-consuming. As shown in FIG. 4, transaction 1 stores compressed Tx21, Tx22, and Tx23 in the calldata in Layer1, and stores Post State Root in Current State Root in the contract states of Layer1. Transaction 1, as shown in FIG. 4, is located in Block N of Layer1. Therefore, a delay caused by the complex computation needed to generate a corresponding proof in Layer2 can occur over a period of time when the proof of Batch M is passed to Block N+412 on Layer1 through transaction 2. From Block N to Block N+412, there is clearly a certain delay, which can be on the order of hours.

To address the issues of computational complexity and long proof generation time, the TEE-Rollup mechanism is proposed. A main difference between the TEE-Rollup mechanism and ZK-Rollup is that the Prover is implemented using a trusted execution environment (TEE), and after verifying information such as a transaction root, a pre state root, and a post state root of a transaction Batch provided by the Sequencer, the Prover uses a private key in the TEE to sign the relevant information of the transaction batch. The signature is then used as a proof and published to Layer1 through the Relayer, and can be quickly verified by the Rollup Contract.

Once a challenge period for any transaction Batch submitted by Layer2 ends, or once a proof corresponding to any transaction Batch is verified in the Rollup Contract for Layer2, that given Batch and its corresponding contract call transaction (such as transaction 1 mentioned above, which is used to call the Commit Batch() contract interface in the Rollup Contract) enter a finality state. This means that all transactions in Layer2 belonging to that given Batch have entered the finality state.

With the development of Rollup technologies, management members of any blockchain system located in Layer2 can, due to certain specific service needs, expect that the blockchain system in Layer2 and the blockchain system in Layer1 can support multiple Rollup modes (rollup mode). Different Rollup modes do not necessarily employ different Rollup mechanisms. For example, two Rollup modes can use a same Rollup mechanism, but the difference lies in Layer1 can use different manners to store packaged transactions submitted by Layer2. For example, both Rollup mode 1 and Rollup mode 2 use ZK-Rollup. Rollup mode 1 needs Layer1 to store the packaged transactions from Layer2 in Layer1 based on original transaction text. However, Rollup mode 2 needs Layer1 to store transaction hashes of the transactions from Layer2, rather than the original transaction texts.

Although Layer1 and Layer2 are used to represent blockchain systems, it is important to understand that Layer1 can typically include one blockchain system, while Layer2 can include one or more blockchain systems. All one or more blockchain systems included in Layer2 use the blockchain system in Layer1 as a corresponding upper-layer blockchain system.

If different Rollup modes employ different Rollup mechanisms, Rollup modes are definitely different. Therefore, the implementations in this specification primarily distinguish different Rollup modes based on different Rollup mechanisms. For example, if the Rollup mechanism used between Layer1 and Layer2 is ZK-Rollup, the corresponding Rollup mode is still denoted as ZK-Rollup; if the Rollup mechanism used between Layer1 and Layer2 is TEE-Rollup, the corresponding Rollup mode is still denoted as TEE-Rollup.

With the increasing prevalence of Rollup modes, there is a growing demand for a blockchain system resource management method that allows users to manage Layer2-related resources more securely and conveniently through Layer1, for example, to start or terminate a Rollup mode as needed by management members, and to manage target resources held by the users in Layer2 through multiple accounts belonging to multiple Rollup modes, as needed by the users.

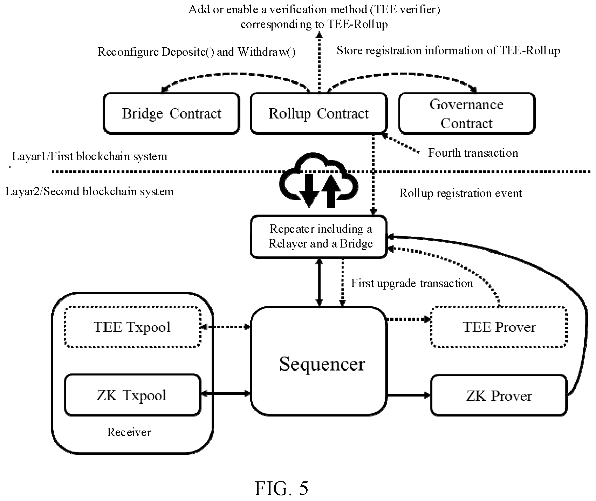

In view of the above-described problems, in the solutions provided in the implementations of this specification, as shown in FIG. 5, at least a rollup contract (Rollup Contract) is deployed in Layer1 (that is, a first blockchain system), and the Rollup Contract includes a second method function for supporting registration of a Rollup mode. A bridge contract (Bridge Contract) and a governance contract (Governance Contract) can also be deployed in the first blockchain system. The Bridge Contract is mainly responsible for managing a blockchain system in Layer2, for example, managing an account and its resource in a second blockchain system in Layer2. The Governance Contract is mainly responsible for managing registration information of various Rollup modes.

Notably, the Bridge Contract and the Governance Contract may not be deployed independently, but directly integrate their included method functions for implementing corresponding functions into contract code of the Rollup Contract. The method functions included in the Bridge Contract and the Governance Contract and their specific functions will be described in detail below.

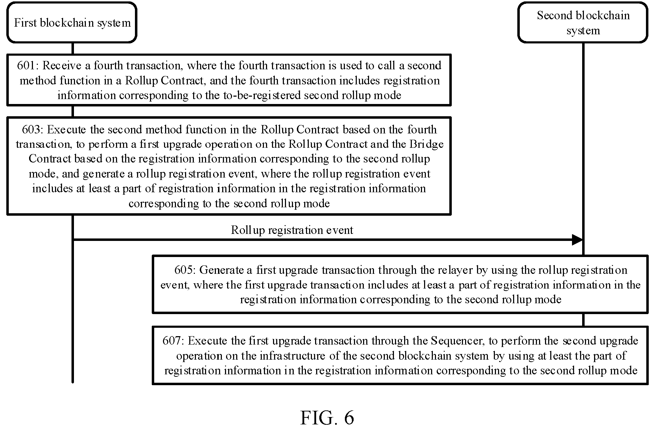

FIG. 6 is a first flowchart illustrating a blockchain system resource management method, according to an implementation of this specification. The method describes an example of a process of registering a new rollup mode (denoted as a second rollup mode) in a first blockchain system and a second blockchain system.

As shown in FIG. 6, the method can include but is not limited to the following step S601 to step S607.

Step S601: The first blockchain system receives a fourth transaction, where the fourth transaction is used to call a second method function in a Rollup Contract, and the fourth transaction includes registration information corresponding to the to-be-registered second rollup mode.

As mentioned above, the second method function is used to support registration of a Rollup mode.

For example, the to-be-registered second rollup mode includes TEE-Rollup, as shown in FIG. 5. A management member of the second blockchain system can initiate the fourth transaction in the first blockchain system. The fourth transaction is used to call the second method function in the Rollup Contract, and the fourth transaction can include registration information corresponding to the TEE-Rollup. The registration information corresponding to TEE-Rollup can include but is not limited to one or more of the following information: identification information, a transaction ordering model, a verification method, and a genesis block. The transaction ordering model can include but is not limited to a consensus algorithm and an upper limit of the number of transactions of packaged transactions.

Step S603: The first blockchain system executes the second method function in the Rollup Contract based on the fourth transaction, to perform a first upgrade operation on the Rollup Contract and the Bridge Contract based on the registration information corresponding to the second rollup mode, and generate a rollup registration event, where the rollup registration event includes at least a part of registration information in the registration information corresponding to the second rollup mode.

For example, the to-be-registered second rollup mode includes TEE-Rollup, as shown in FIG. 5. The first upgrade operation performed on the Rollup Contract can include but is not limited to adding or enabling a verification method TEE verifier corresponding to TEE-Rollup in the Rollup Contract. The first upgrade operation performed on the Bridge Contract can include but is not limited to reconfiguring a contract interface Deposite() and a contract interface Withdraw() in the Bridge Contract, so that an account registered in the first blockchain system can call the contract interface Deposite() to add a corresponding share of second target resource to a sub-account belonging to TEE-Rollup in the second blockchain system; and for a second target resource held by a sub-account belonging to TEE-Rollup in the second blockchain system, can call the contract interface Withdraw() according to a corresponding policy to add a corresponding share of first target resource to an account corresponding to the sub-account in the first blockchain system.

When executing the second method function in the Rollup Contract based on the fourth transaction, the first blockchain system can further store the registration information corresponding to the second rollup mode in the Governance Contract, for example, store the registration information of TEE-Rollup.

At least the part of registration information described above can include, for example, but not limited to, identification information, a transaction ordering model, and a genesis block.

A relayer in the second blockchain system, for example, a shared bridge (Bridge) included in the relayer, can monitor the rollup registration event in the first blockchain system, and then perform a second upgrade operation on an infrastructure of the second blockchain system by using at least the part of registration information included in the rollup registration event, so that network rollup can be implemented by using the newly registered second rollup mode between the first blockchain system after the first upgrade operation and the second blockchain system after the second upgrade operation.

The above-described shared bridge (Bridge) can be an independent service or exist in an SDK form. The Bridge can hold a bridge account registered by the first blockchain system by the management member of the second blockchain system, and a private key corresponding to the bridge account. Further, the Bridge can generate transactions according to certain rules by using the bridge account and send them to the first blockchain system, and generate transactions according to certain rules and send them to a Sequencer in the second blockchain system.

For example, the second blockchain system can perform the following step S605 and step 607 based on, for example, the rollup registration event.

Step S605: The second blockchain system generates a first upgrade transaction through the relayer by using the rollup registration event, where the first upgrade transaction includes at least a part of registration information in the registration information corresponding to the second rollup mode.

The first upgrade transaction can be a special transaction that is not necessarily packaged in packaged transactions submitted by the second blockchain system. For example, the Bridge included in the relayer can perform special setting on a sender field and a receiver field of the first upgrade transaction, for example, set a From field to a bridge account and a To field to Null, so that a Sequencer of the second blockchain system can accurately learn that the first upgrade transaction is the special transaction, and execute a transaction expected to be executed by the first upgrade transaction and does not package the transaction in a batch. A Data field of the first upgrade transaction can include at least the part of registration information included in the rollup registration event.

Step S607: The second blockchain system executes the first upgrade transaction through the Sequencer, to perform the second upgrade operation on the infrastructure of the second blockchain system by using at least the part of registration information in the registration information corresponding to the second rollup mode.

For example, the to-be-registered second rollup mode includes TEE-Rollup, as shown in FIG. 5. For example, the shared bridge (Bridge) of the second blockchain system can send the first upgrade transaction to the Sequencer, and the first upgrade transaction includes at least a part of registration information included in the registration information of TEE-Rollup. When the Sequencer of the second blockchain system performs the first upgrade transaction, the second upgrade operation performed on the infrastructure of the second blockchain system can include but is not limited to the following: configuring a transaction pool corresponding to TEE-Rollup (TEE Txpool) in a receiver; reconfiguring the Sequencer, so that the reconfigured Sequencer can process a transaction in TEE Txpool based on the identification information, the transaction ordering model, and the genesis block of TEE-Rollup; and deploying a prover corresponding to TEE-Rollup (TEE Prover) in the second blockchain system.

With reference to FIG. 5 and FIG. 6, an example of a process of registering with TEE-Rollup is described above. However, it is not difficult to understand that another Rollup mode, such as a ZK-Rollup mode or another Rollup mode, can be registered by using a similar process to that described above, so that M Rollup modes greater than 1 can be simultaneously supported between the first blockchain system and the second blockchain system.

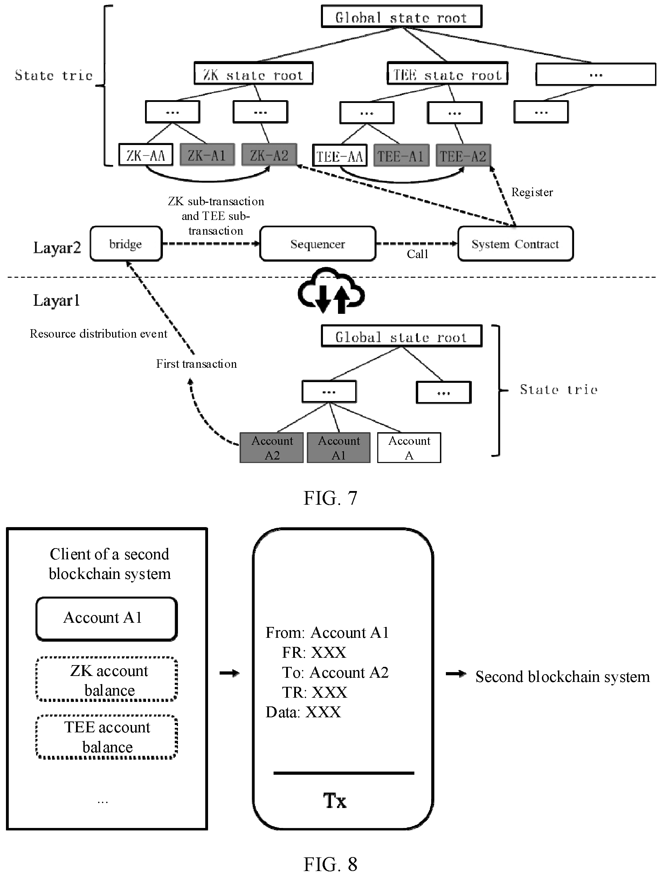

As shown in FIG. 7, when the second blockchain system supports M rollup modes greater than 1, the second blockchain system can maintain M account sets for the M Rollup modes. That is, any user, such as user 1, can have one or more accounts with a value not exceeding M in the second blockchain system. Correspondingly, a state trie (state trie) corresponding to a world state of the second blockchain system can include M sub-state tries corresponding to the M Rollup modes, and a state root (that is, Global state root) corresponding to the world state of the second blockchain system can be calculated by using state roots respectively corresponding to the M sub-state tries.

Based on this, in addition to the above-described steps S601 to S607, the Sequencer can also initialize a sub-state trie corresponding to the second rollup mode in the second blockchain system, including the following: registering a bridge sub-account belonging to the second rollup mode and corresponding to the bridge account in the sub-state trie corresponding to the second rollup mode, for example, performing derivation calculation based on the bridge account corresponding to the second blockchain system and the second rollup mode, to obtain the bridge sub-account belonging to the second rollup mode and corresponding to the bridge account, and register the bridge sub-account in the sub-state trie corresponding to the second rollup mode through a system contract in the second blockchain system.

An algorithm used to perform derivation calculation on the account (including the bridge account) registered in the first blockchain system can be predetermined, and the algorithm used to perform derivation calculation is not limited in the implementations in this specification. In a typical example, for bridge account A registered in the first blockchain system, for example, a hash value corresponding to identification information of bridge account A and the second rollup mode can be calculated, and the first x bits in the hash value are used as the bridge sub-account belonging to the second rollup mode and corresponding to the bridge account.

As shown in FIG. 7, when the first blockchain system includes a bridge account, that is, account A, registered by the management member of the second blockchain system and corresponding to the second blockchain system, if the M rollup modes supported by the second blockchain system include ZK-Rollup and TEE-Rollup, a sub-state trie corresponding to ZK-Rollup can include a bridge sub-account ZK-AA corresponding to account A, while a sub-state trie corresponding to TEE-Rollup can include a bridge sub-account TEE-AA corresponding to account A.

Similarly, to reduce the number of accounts users needs to maintain in the first blockchain system and the second blockchain system, thereby improving user experience, an account of any user such as user 1 in any Rollup mode in the second blockchain system corresponds to an account registered by user 1 in the first blockchain system as one sub-account. For example, as shown in FIG. 7, similar to the above-mentioned bridge sub-accounts ZK-AA and TEE-AA both corresponding to account A, account ZK-A1 belonging to ZK-Rollup and account TEE-A1 belonging to TEE-Rollup both correspond to account A1 registered by user 1 in Layer1.

Any user, for example, account ZK-A1 of user 1 in ZK-Rollup, can be obtained by performing derivation calculation based on account A1 and rollup mode ZK-Rollup. Similarly, account TEE-A1 of user 1 in TEE-Rollup can be obtained by performing derivation calculation based on account A1 and rollup mode TEE-Rollup. Alternatively, in the second blockchain system, a mapping relationship table can be directly maintained, to construct and store a correspondence between account A1 of any user such as user 1 in the first blockchain system and an account of user 1 in any Rollup mode in the second blockchain system.

Because there is a correspondence between account A1 registered by user 1 in the first blockchain system and various accounts of user 1 in the second blockchain system, such as account ZK-A1 and account TEE-A1, user 1 can multiplex account A1 registered by user 1 in the first blockchain system and a corresponding public and private key pair, to initiate a corresponding transaction in the second blockchain system as needed. Correspondingly, a client device of the second blockchain system does not need to show user 1 its account ZK-A1 in ZK-Rollup and its account TEE-A1 in TEE-Rollup, but only needs to show user 1 a share of a first target resource held by an account of user 1 in ZK-Rollup and a share of a first target resource held by an account of user 1 in ZK-Rollup.

For example, as shown in FIG. 8, the client device of the second blockchain system can only show user 1 account A1 registered by user 1 in the first blockchain system. When user 1 holds a second target resource in any Rollup mode such as ZK-Rollup and TEE-Rollup, the client device of the second blockchain system can also show user 1 a share (that is, an ZK account balance) of a second target resource held by its sub-account in ZK-Rollup, or can show user 1 a share (that is, a TEE account balance) of a second target resource held by its sub-account in TEE-Rollup, but does not show user 1 accounts ZK-A1 and TEE-A1.

When user 1 expects to initiate transaction Tx in the second blockchain system to achieve a certain service purpose, user 1 can initiate transaction Tx by using account A1 registered in the first blockchain system. In an example in which user 1 needs to transfer the second target resource held by user 1 to user 2, a From field and a To field in transaction Tx can respectively include account A1 and account A2 respectively registered by user 1 and user 2 in the first blockchain system. In addition, transaction Tx can further include an indication field (denoted as FR) corresponding to the From field and an indication field (denoted as TR) corresponding to the To field. A field value in the FR field indicates a Rollup mode to which a sub-account corresponding to account A1 and needing to transfer a second target resource out through transaction Tx belongs. A field value in the TR field indicates a Rollup mode to which a sub-account corresponding to account A2 and needing to transfer a second target resource in through transaction Tx belongs.

In view of that each sub-account of user 1 in the second blockchain system that belongs to the M Rollup modes has a correspondence with account A1 registered by user 1 in the first blockchain system, and each sub-account of user 2 in the second blockchain system that belongs to the M Rollup modes has a correspondence with account A2 registered by user 2 in the first blockchain system, the second blockchain system can learn, based on Transaction Tx, the sub-account that actually needs to transfer the second target resource out and the sub-account that actually needs to transfer the second target resource in transaction Tx, to complete a resource transfer transaction that transaction Tx is expected to complete by executing transaction Tx.

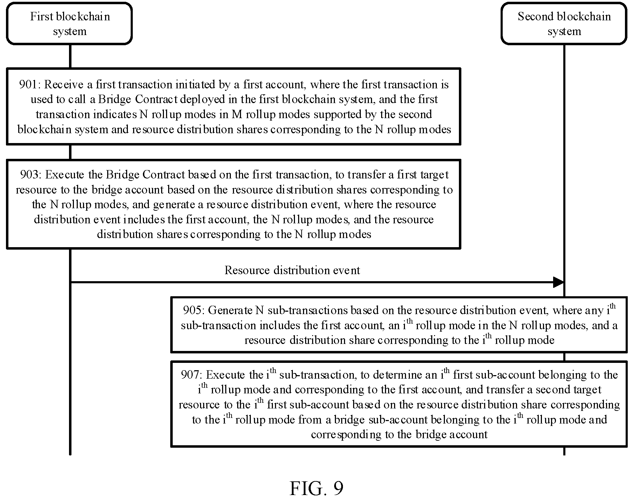

FIG. 9 is a second flowchart illustrating a blockchain system resource management method, according to an implementation of this specification. The method describes an example of a process in which any first user adds a second target resource to a sub-account of the first user in a second blockchain system by using a first account registered by the first user in the first blockchain system when the second blockchain system supports M rollup modes.

As shown in FIG. 9, the method can include but is not limited to the following step S901 to step S907.

Step S901: The first blockchain system receives a first transaction initiated by a first account, where the first transaction is used to call a Bridge Contract deployed in the first blockchain system, and the first transaction indicates N rollup modes in M rollup modes supported by the second blockchain system and resource distribution shares corresponding to the N rollup modes.

A first user can initiate the first transaction by using the first account registered by the first user in the first blockchain system.

In the first transaction, a From field can include the first account, a To field can include a contract account corresponding to the Bridge Contract, and a Data field can include the N rollup modes in the M rollup modes supported by the second blockchain system and the resource distribution shares corresponding to the N rollup modes. In addition, the Data field of the first transaction can further include identification information of the second blockchain system and identification information of a method function/contract interface in the Bridge Contract that the first transaction expects to call, for example, identification information of the contract interface Deposite() in the Bridge Contract.

Step S903: The first blockchain system executes the Bridge Contract based on the first transaction, to transfer a first target resource to the bridge account based on the resource distribution shares corresponding to the N rollup modes, and generate a resource distribution event, where the resource distribution event includes the first account, the N rollup modes, and the resource distribution shares corresponding to the N rollup modes.

For example, the first blockchain system can execute Deposite() in the Bridge Contract based on the first transaction, to generate the resource distribution event. In a possible implementation, the resource distribution event can further include the identification information of the second blockchain system.

To ensure reliability of resource transfer, a management member of the second blockchain system can register a bridge account such as account A corresponding to the second blockchain system in the first blockchain system.

The Bridge Contract can further distribute a storage resource event by using a corresponding asset transfer event list or in another manner.

A relayer in the second blockchain system, for example, a shared bridge (Bridge) included in the relayer, can monitor the resource distribution event generated in the first blockchain system, and perform the following step S905 based on the monitored resource distribution event.

To ensure security, the Bridge included in the relayer of the second blockchain system can further query a simplified payment verification (SPV) proof corresponding to the resource distribution event from the first blockchain system. The following step S905 is performed only after it is determined, through the SPV proof, that a block to which the first transaction belongs has been successfully submitted in the first blockchain system.

Step S905: The second blockchain system generates N sub-transactions based on the resource distribution event, where any i^{th} sub-transaction includes the first account, an i^{th} rollup mode in the N rollup modes, and a resource distribution share corresponding to the i^{th} rollup mode.

In the i^{th} sub-transaction, a From field can include the bridge account, a To field can include the first account, and a Data field can include the resource distribution share corresponding to the i^{th} rollup mode. Both a Rollup mode included in an FR field corresponding to the From field and a Rollup mode included in a TR field corresponding to the To field are the i^{th} rollup mode. As shown in FIG. 7, it is assumed here that the N rollup modes include TEE-Rollup and ZK-Rollup. In this case, the Bridge can generate a TEE sub-transaction and a ZK sub-transaction based on the resource distribution event. In the ZK sub-transaction, both a Rollup mode included in an FR field corresponding to the From field and a Rollup mode included in a TR field corresponding to the To field are ZK-Rollup. In the TEE sub-transaction, a Rollup mode included in an FR field corresponding to the From field and a Rollup mode included in a TR field corresponding to the To field are TEE-Rollup.

Step S907: The second blockchain system executes the i^{th} sub-transaction, to determine an i^{th} first sub-account belonging to the i^{th} rollup mode and corresponding to the first account, and transfer a second target resource to the i^{th} first sub-account based on the resource distribution share corresponding to the i^{th} rollup mode from a bridge sub-account belonging to the i^{th} rollup mode and corresponding to the bridge account.

The second blockchain system can execute the i^{th} sub-transaction through its Sequencer. With reference to the above-described descriptions, it can be understood that when executing the i^{th} sub-transaction, in a possible implementation, the Sequencer can obtain the i^{th} first sub-account by performing derivation calculation by using the first account included in the i^{th} sub-transaction and the i^{th} rollup mode; in another possible implementation, the Sequencer can obtain the i^{th} first sub-account by querying a mapping relationship table maintained in the second blockchain system.

After obtaining the i^{th} first sub-account, the Sequencer can query the i^{th} first sub-account from the number of sub-states corresponding to the i^{th} rollup mode. If the i^{th} first sub-account cannot be identified from a sub-state trie corresponding to the i^{th} rollup mode, the i^{th} first sub-account can be registered in the corresponding sub-state trie by calling a system contract of the second blockchain system.

As shown in FIG. 7, it is assumed that the first account includes account A2, and the N Rollup modes include TEE-Rollup and ZK-Rollup.

If the Sequencer fails to query sub-account ZK-A2 corresponding to account A2 from a sub-state trie corresponding to ZK-Rollup in a process of executing a ZK sub-transaction, the Sequencer can call the System Contract of the second blockchain system, to register sub-account ZK-A2 in the sub-state trie corresponding to ZK-Rollup. Similarly, if the Sequencer fails to query sub-account TEE-A2 corresponding to account A2 from a sub-state trie corresponding to TEE-Rollup in a process of executing a TEE sub-transaction, the Sequencer can call the System Contract of the second blockchain system, to register sub-account TEE-A2 in the sub-state trie corresponding to TEE-Rollup.

When the number of sub-states corresponding to the i^{th} rollup mode includes the i^{th} first sub-account, the Sequencer of the second blockchain system can transfer the second target resource to the i^{th} first sub-account based on the resource distribution share included in the i^{th} sub-transaction from the bridge sub-account belonging to the i^{th} rollup mode and corresponding to the bridge account.

Continuing with the above-described example and referring to FIG. 7, for example, the Sequencer can transfer a second target resource from ZK-AA to sub-account ZK-A2 based on the resource distribution share included in the ZK sub-transaction, and transfer a second target resource from TEE-AA to sub-account ZK-A2 based on the resource distribution share included in the TEE sub-transaction.

Alternatively, the second target resource can be deposited in the i^{th} first sub-account in another manner other than step 907. For example, when the second blockchain system executes the i^{th} sub-transaction, the i^{th} first sub-account belonging to the i^{th} rollup mode and corresponding to the first account can be determined, and the second target resource can be minted for the i^{th} first sub-account based on the resource distribution share corresponding to the i^{th} rollup mode. That is, in this implementation, there is no need to transfer the second target resource from the bridge sub-account belonging to the i^{th} rollup mode and corresponding to the bridge account. Instead, a corresponding share of second target resource is minted for the i^{th} first sub-account.

Considering that the i^{th} sub-transaction may fail to be executed, after a batch to which the i^{th} sub-transaction belongs is successfully submitted to the first blockchain system, for example, proof data corresponding to the batch to which the i^{th} sub-transaction belongs is submitted to the first blockchain system and verified, so that the i^{th} sub-transaction and the batch to which the i^{th} sub-transaction belongs enter a finality state, the Rollup Contract in the first blockchain system can perceive that the i^{th} sub-transaction has entered a finality state. In this case, the Rollup Contract can also generate an i^{th} asset transfer completion event corresponding to the i^{th} sub-transaction by calling the Bridge Contract. The asset transfer completion event can include, for example, the first account, the i^{th} rollup mode, and the resource distribution share corresponding to the i^{th} rollup mode. Further, after the Bridge Contract collects N asset transfer completion events corresponding to N sub-transactions, the Bridge Contract can confirm that the N asset transfer completion events match the above-mentioned resource distribution events based on content included in the N asset transfer completion events and the above-mentioned resource distribution events, thereby confirming that all transactions expected to be executed in the first transaction have been successfully executed.

Correspondingly, if the Bridge Contract fails to collect the N asset transfer completion events corresponding to the N sub-transactions, it indicates that some or all sub-transactions fail to be successfully executed in the second blockchain system. In this case, the management member of the Bridge Contract can, for example, determine a compensation share of the first target resource that needs to be returned from the bridge account to the first account based on the resource distribution events and the collected asset transfer completion events. Then, by calling transactions or other means through corresponding contracts, the first target resource can be transferred from the bridge account to the first account based on the compensation share.

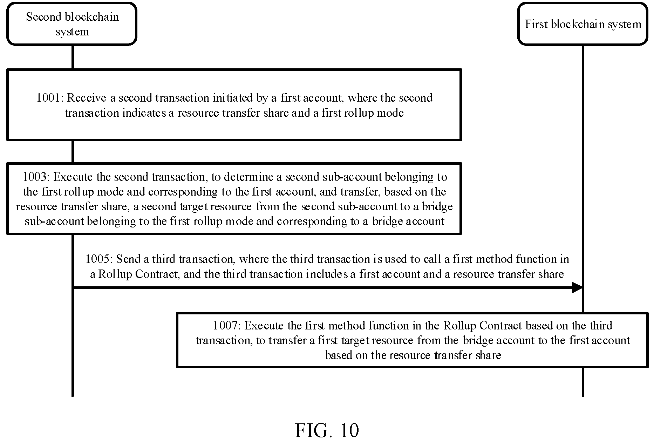

FIG. 10 is a third flowchart illustrating a blockchain system resource management method, according to an implementation of this specification. The method describes an example of a process in which any first user adds a corresponding share of first target resource to a first account registered by the first user in a first blockchain system based on a second target resource held by a sub-account of the first user belonging to any rollup mode in a second blockchain system when the second blockchain system supports M rollup modes.

As shown in FIG. 10, the method can include but is not limited to the following step S1001 to step S1007.

Step S1001: The second blockchain system receives a second transaction initiated by a first account, where the second transaction indicates a resource transfer share and a first rollup mode. The first rollup mode belongs to M rollup modes supported by the second blockchain system.

With reference to the data format of transaction Tx initiated by the user in the second blockchain system described above, a From field of the second transaction can include, for example, the first account, and a rollup mode included in an FR field corresponding to the From field can be the first rollup mode; and a Data field of the second transaction can include, for example, the resource transfer share. In addition, a To field of the second transaction and a TR field corresponding to the second transaction can be set according to a predetermined rule. For example, both the To field and the TR field are Null. Alternatively, the To field and the From field include a same first account, and the TR field and the FR field include a same first rollup mode.

After receiving the second transaction, a receiver of the second blockchain system can add the second transaction to a transaction pool corresponding to the first rollup mode based on the first rollup mode included in the FR field corresponding to a sender field in the second transaction.

Step S1003: The second blockchain system executes the second transaction, to determine a second sub-account belonging to the first rollup mode and corresponding to the first account, and transfer, based on the resource transfer share, a second target resource from the second sub-account to a bridge sub-account belonging to the first rollup mode and corresponding to a bridge account.

A Sequencer of the second blockchain system can pull multiple transactions from the transaction pool corresponding to the first rollup mode, sort and execute the multiple transactions, and generate corresponding packaged transactions. With reference to the above-described descriptions, it can be understood that when executing the second transaction, in a possible implementation, the Sequencer can obtain the second sub-account belonging to the first rollup mode and corresponding to the first account by performing derivation calculation by using the first account included in the second transaction and the first rollup mode; in another possible implementation, the Sequencer can obtain the second sub-account by querying a mapping relationship table maintained in the second blockchain system.

Notably, when executing the second transaction, the Sequencer can trigger the second blockchain system to generate a third transaction corresponding to the second transaction based on a special structure of the second transaction. For example, both the To field and the TR field are Null, or the To field and the From field include a same first account, and the TR field and the FR field include a same first rollup mode. For example, when executing the second transaction, the Sequencer can generate a resource extraction event based on the above-described special structure. The resource extraction event includes the first account and the resource transfer share, and can further include a batch number of a third batch to which the second transaction belongs in the second blockchain system. For example, a Bridge of the second blockchain system can generate the third transaction based on the resource extraction event.

Correspondingly, in step S1005, the second blockchain system sends the third transaction to the first blockchain system, where the third transaction is used to call a first method function in a Rollup Contract, and the third transaction includes the first account and the resource transfer share.

To ensure that the first blockchain system can determine whether the second transaction corresponding to the third transaction is successfully executed, the third transaction can further include the batch number of the third batch to which the second transaction belongs, and the third transaction can further include a transaction number of the second transaction in the third batch. In addition, the Bridge of the second blockchain system can further send the third transaction to the first blockchain system after a Relayer has completed submitting proof data corresponding to the third batch to the first blockchain system.

Correspondingly, in step S1007, the first blockchain system executes the first method function in the Rollup Contract based on the third transaction, to transfer a first target resource from the bridge account to the first account based on the resource transfer share.

When the third transaction includes the batch number and the transaction number, the first blockchain system can specifically execute the first method function in the Rollup Contract based on the third transaction, to first determine, based on the batch number of the third batch included in the third transaction, whether the third batch has entered a finality state; if yes, query, based on the transaction number included in the third transaction, whether the third batch includes the second transaction corresponding to the third transaction; and if yes, transfer the first target resource from the bridge account to the first account based on the resource transfer share. It can be understood that matching between the second transaction and the third transaction means that the second transaction and the third transaction include a same first account and a same resource transfer share.

When the first blockchain system executes the third transaction, the third batch to which the second transaction belongs may not have entered a finality state. In this case, when executing the first method function in the Rollup Contract based on the third transaction, the first blockchain system can set a trigger condition in the Rollup Contract based on the batch number of the third batch to which the second transaction belongs and the transaction number of the second transaction in the third batch. After the second blockchain system completes submitting the proof data of the third batch to which the second transaction belongs to the Rollup Contract, and the proof data is verified, so that the third batch to which the second transaction belongs enters a finality state, the trigger condition set in the Rollup Contract is satisfied. This triggers the corresponding first method function to continue to query, based on the transaction number included in the third transaction, whether the third batch includes the second transaction corresponding to the third transaction, and if yes, transfer the first target resource from the bridge account to the first account based on the resource transfer share.

In a possible implementation, when the first target resource needs to be transferred from the bridge account to the first account, the first method function in the Rollup Contract can call a contract interface Withdraw() in the Bridge Contract, to transfer the first target resource from the bridge account to the first account through the contract interface Withdraw() based on the resource transfer share.

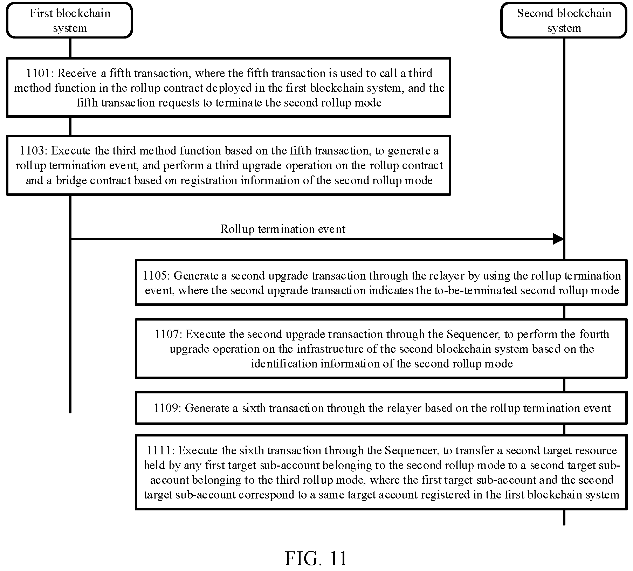

FIG. 11 is a fourth flowchart illustrating a blockchain system resource management method, according to an implementation of this specification. The method describes an example of a process of terminating a rollup mode (denoted as a second rollup mode) in a first blockchain system and a second blockchain system.

As shown in FIG. 11, the method can include but is not limited to the following step S1101 to step S1107.

Step S1101: The first blockchain system receives a fifth transaction, where the fifth transaction is used to call a third method function in a Rollup Contract, and the fifth transaction requests to terminate the second rollup mode.

A management member of the second blockchain system can initiate the fifth transaction in the first blockchain system, and the fifth transaction is used to call the third method function in the Rollup Contract, where the third method function can indicate the second rollup mode that needs to be terminated.

Step S1103: The first blockchain system executes the third method function based on the fifth transaction, to generate a rollup termination event, and perform a third upgrade operation on the rollup contract and a bridge contract based on registration information of the second rollup mode.

The third upgrade operation corresponds to the above-described first upgrade operation.

For example, the to-be-terminated second rollup mode includes TEE-Rollup. The third upgrade operation performed on the Rollup Contract can include but is not limited to deleting or disabling a verification method TEE verifier corresponding to TEE-Rollup in the Rollup Contract. The third upgrade operation performed on the Bridge Contract can include but is not limited to reconfiguring a contract interface Deposite() and a contract interface Withdraw() in the Bridge Contract, so that an account registered in the first blockchain system cannot call the contract interface Deposite() to add a corresponding share of second target resource to a sub-account belonging to TEE-Rollup in the second blockchain system; and a sub-account belonging to TEE-Rollup in the second blockchain system cannot add a first target resource to an account corresponding to the sub-account in the first blockchain system based on its share of second target resource through the contract interface Withdraw().

The rollup termination event can indicate the to-be-terminated second rollup mode, for example, includes identification information of the second rollup mode.

A relayer in the second blockchain system, for example, a Bridge included in the relayer, can monitor the rollup termination event, and further perform a fourth upgrade operation on an infrastructure of the second blockchain system based on a third rollup mode indicated by the rollup termination event, so that the first blockchain system after the third upgrade operation and the second blockchain system after the fourth upgrade operation do not support the second rollup mode to implement rollup.

For example, the second blockchain system can perform the following step S1105 to step 1107 based on, for example, the rollup termination event.

Step 1105: The second blockchain system generates a second upgrade transaction through the relayer by using the rollup termination event, where the second upgrade transaction indicates the to-be-terminated second rollup mode.

The second upgrade transaction can be a special transaction that is not necessarily packaged in packaged transactions submitted by the second blockchain system. For example, the Bridge included in the relayer can perform special setting on a sender field and a receiver field of the second upgrade transaction, for example, set a From field to a bridge account and a To field to Null, so that a Sequencer of the second blockchain system can accurately learn that the second upgrade transaction is the special transaction, and execute a transaction expected to be executed by the second upgrade transaction and does not package the transaction in a batch. A Data field of the second upgrade transaction can include the identification information of the second rollup mode.

Step S1107: The second blockchain system executes the second upgrade transaction through the Sequencer, to perform the fourth upgrade operation on the infrastructure of the second blockchain system based on the identification information of the second rollup mode.

For example, the to-be-terminated second rollup mode includes TEE-Rollup. For example, the shared bridge (Bridge) of the second blockchain system can send the second upgrade transaction to the Sequencer, and the second upgrade transaction includes identification information of TEE-Rollup. When the Sequencer of the second blockchain system performs the second upgrade transaction, the fourth upgrade operation performed on the infrastructure of the second blockchain system can include but is not limited to the following: deleting or disabling a transaction pool corresponding to TEE-Rollup (TEE Txpool) in a receiver; reconfiguring the Sequencer, so that the reconfigured Sequencer no longer processes a transaction in TEE Txpool; and deleting or disabling a prover corresponding to TEE-Rollup (TEE Prover) in the second blockchain system.

In a possible implementation, depending on the rollup termination event corresponding to the second rollup mode, the second blockchain system can further perform steps S1109 and S1111 to transfer a second target resource held by a first target sub-account belonging to the second rollup mode and corresponding to any account (denoted as a target account) to a second target sub-account belonging to the third rollup mode and corresponding to the target account. The target account is an external account registered in the first blockchain system.

Step S1109: The second blockchain system generates a sixth transaction through the relayer based on the rollup termination event.

The sixth transaction can be a special transaction that is not necessarily packaged in packaged transactions submitted by the second blockchain system. For example, the Bridge included in the relayer can perform special setting on a sender field and a receiver field of the sixth transaction, for example, set both a From field and a To field to Null, and set both an FR field corresponding to the From field and a TR field corresponding to the To field to the second rollup mode, so that the Sequencer of the second blockchain system can accurately learn that the sixth transaction is the special transaction, and execute a transaction expected to be executed by the sixth transaction and does not package the transaction in a batch.

Step S1111: The second blockchain system executes the sixth transaction through the Sequencer, to transfer a second target resource held by any first target sub-account belonging to the second rollup mode to a second target sub-account belonging to the third rollup mode, where the first target sub-account and the second target sub-account correspond to a same target account registered in the first blockchain system.

As shown in FIG. 7, with reference to an example in the above-described description, it is assumed that the terminated second rollup mode is TEE-Rollup, and the third rollup mode includes ZK-Rollup. In this case, a second target resource held by account TEE-A1 can be transferred to account ZK-A1, and a second target resource held by account TEE-A2 can be transferred to account ZK-A2.

When the second rollup mode is terminated, the target resource held by any first target sub-account belonging to the second rollup mode can be transferred in another manner other than step S1109 and step 1111. For example, the Bridge included in the relayer of the second blockchain system can generate a target transaction. The target transaction is used to call a certain predetermined method function in the Rollup Contract deployed in the first blockchain system. When executing a predetermined function based on the target transaction, for any first target sub-account belonging to the second rollup mode, the first blockchain system transfers a first target resource to the target account registered in the first blockchain system from the bridge account corresponding to the second blockchain system based on a current share of second target resource held by the sub-account.

Based on a same concept as the above-mentioned method implementations, an implementation of this specification further provides a blockchain node in a first blockchain system. A bridge contract is deployed in the first blockchain system, and the blockchain node includes: a transaction receiving unit, configured to receive a first transaction initiated by a first account, where the first transaction is used to call the bridge contract, and the first transaction indicates N rollup modes and resource distribution shares corresponding to the N rollup modes; and a transaction execution unit, configured to execute the bridge contract based on the first transaction, to transfer a first target resource to a bridge account based on the resource distribution shares corresponding to the N rollup modes, and generate a resource distribution event, where the resource distribution event includes the first account, the N rollup modes, and the resource distribution shares corresponding to the N rollup modes, and the resource distribution event is used to support a second blockchain system to generate N sub-transactions; and execute any i^{th} sub-transaction, to determine an i^{th} first sub-account belonging to an i^{th} rollup mode in the N rollup modes and corresponding to the first account, and deposit a second target resource in the i^{th} first sub-account based on the resource distribution share corresponding to the i^{th} rollup mode.

Based on a same concept as the above-mentioned method implementations, an implementation of this specification further provides a second blockchain system. The second blockchain system includes: a relayer, configured to obtain a resource distribution event from a first blockchain system, where a bridge contract is deployed in the first blockchain system, the resource distribution event is generated by the first blockchain system by executing the bridge contract based on a first transaction, the first transaction is initiated by a first account, and the first transaction indicates N rollup modes and resource distribution shares corresponding to the N rollup modes, where the relayer is further configured to generate N sub-transactions based on the resource distribution event, where any i^{th} sub-transaction includes the first account, an i^{th} rollup mode in the N rollup modes, and a resource distribution share corresponding to the i^{th} rollup mode; and a sequencer, configured to execute the i^{th} sub-transaction, to determine an i^{th} first sub-account belonging to the i^{th} rollup mode and corresponding to the first account, and deposit a second target resource in the i^{th} first sub-account based on the resource distribution share corresponding to the i^{th} rollup mode.

An implementation of this specification further provides a computer-readable storage medium. The computer-readable storage medium stores a computer program/instructions. When the computer program/instructions are executed in a computer, the computer performs the method steps performed by a computing device or a data storage system in the above-mentioned method implementations.

An implementation of this specification further provides a computing device, including a memory and a processor. The memory stores a computer program/instructions, and when executing the computer program/instructions, the processor implements the method steps performed by a computing device or a data storage system in the above-mentioned method implementations.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers obtain the corresponding hardware circuit structure by programming the improved method process into the hardware circuit. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system into a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). Currently, the Very-High-Speed Integrated Circuit Hardware Description Language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be in a form of a microprocessor or a processor, a computer-readable medium that stores computer-readable program code (such as software or firmware) that can be executed by the microprocessor or the processor, a logic gate, a switch, an application-specific integrated circuit (ASIC), a programmable logic controller, or an embedded microcontroller. Examples of the controller include but are not limited to the following microcontrollers: ARC 625D, Atmel AT91SAM, Microchip PIC18F26K20, and Silicone Labs C8051F320. A storage controller can also be implemented as a part of control logic of a storage. A person skilled in the art also knows that in addition to implementing the controller by using only the computer-readable program code, logic programming can be performed on method steps to enable the controller to implement the same function in a form of a logic gate, a switch, an application-specific integrated circuit, a programmable logic controller, an embedded microcontroller, etc. Therefore, the controller can be considered as a hardware component, and an apparatus that is configured to implement various functions and that is included in the controller can also be considered as a structure in the hardware component. Alternatively, the apparatus configured to implement various functions can even be considered as both a software module implementing a method and a structure in the hardware component.

The system, apparatus, module, or unit described in the above-mentioned implementations can be specifically implemented by a computer chip or an entity, or can be implemented by a product having a certain function. A typical implementation device is a server system. Certainly, this application does not exclude that with development of future computer technologies, a computer that implements a function of the above-mentioned implementation can be, for example, a personal computer, a laptop computer, a vehicle-mounted man-machine interaction device, a cellular phone, a camera phone, a smartphone, a personal digital assistant, a media player, a navigation device, an e-mail device, a game console, a tablet computer, a wearable device, or a combination of any of these devices.

Although one or more implementations of this specification provide method operating steps as described in the implementations or a flowchart, more or fewer operating steps can be included on the basis of conventional or noncreative means. A sequence of steps listed in the implementations is merely one of various step execution sequences and does not indicate a sole execution sequence. In practice, when being executed by an apparatus or an end-user device product, the steps can be performed sequentially or in parallel (for example, by parallel processors or in a multi-thread processing environment, or even in a distributed data processing environment) based on the method shown in the implementations or the accompanying drawings. The terms "include", "comprise", or any other variants thereof are intended to cover a non-exclusive inclusion, so that a process, a method, a product, or a device that includes a list of elements not only includes those elements but also includes other elements that are not expressly listed, or further includes elements inherent to such a process, method, product, or device. Without more constraints, the existence of additional identical or equivalent elements in the process, method, product, or device that includes the elements is not excluded. For example, if the words first, second, etc. are used for indicating names, they do not indicate any particular order.

For ease of description, the above-mentioned apparatus is described by dividing functions into various modules. Certainly, during implementation of one or more implementations of this specification, the functions of the modules can be implemented in same one or more pieces of software and/or hardware, or modules implementing the same function can be implemented by using a combination of a plurality of sub-modules or sub-units, etc. The described apparatus implementations are merely examples. For example, division into the units is merely logical function division and there can be other division methods in actual implementation. For example, a plurality of units or components can be combined or integrated into another system, or some features can be ignored or not performed. In addition, the displayed or discussed mutual couplings or direct couplings or communication connections can be implemented by using some interfaces. The indirect couplings or communication connections between the apparatuses or units can be implemented in electronic, mechanical, or other forms.

This application is described with reference to a flowchart and/or a block diagram of a method, an apparatus (system), and a computer program product according to some implementations of this application. It should be understood that computer program instructions can be used to implement each process and/or each block in the flowcharts and/or the block diagrams and a combination of a process and/or a block in the flowcharts and/or the block diagrams. These computer program instructions can be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions can be stored in a computer-readable storage that can direct the computer or any other programmable data processing device to work in a specific manner, so that the instructions stored in the computer-readable storage generate an artifact that includes an instruction apparatus. The instruction apparatus implements a specific function in one or more processes in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more central processing units (CPU), input/output interfaces, network interfaces, and memories.

The memory can include a non-persistent memory, a random access memory (RAM), a non-volatile memory, and/or another form in a computer-readable medium, for example, a read-only memory (ROM) or a flash random access memory (flash RAM). The memory is an example of the computer-readable medium.

The computer-readable medium includes persistent, non-persistent, removable, and non-removable media that can store information by using any method or technology. The information can be computer-readable instructions, a data structure, a program module, or other data. Examples of the storage medium of the computer include, but are not limited to, a phase-change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a read-only memory (CD-ROM), a digital versatile disk (DVD) or another optical storage, a magnetic cassette tape, a magnetic tape storage, graphene storage, or another magnetic storage device, or any other non-transmission medium, which can be configured to store information accessible to the computing device. As described in this specification, the computer-readable medium does not include computer-readable transitory media such as a modulated data signal and a carrier.

A person skilled in the art should understand that one or more implementations of this specification can be provided as methods, systems, or computer program products. Therefore, the one or more implementations of this specification can use a form of hardware only implementations, software only implementations, or implementations with a combination of software and hardware. Moreover, the one or more implementations of this specification can use the form of a computer program product implemented on one or more computer available storage media (including, but not limited to, disk storage, CD-ROM, optical memory, etc.), where the computer available program code is included.

The one or more implementations of this specification can be described in common contexts of computer-executable instructions executed by a computer, such as a program module. Generally, the program module includes a routine, a program, an object, a component, a data structure, etc. executing a specific task or implementing a specific abstract data type. One or more implementations of this specification can alternatively be practiced in a distributed computing environment in which tasks are performed by remote processing devices connected by using communication networks. In the distributed computing environment, the program module can be located in both local and remote computer storage media including storage devices.

The implementations of this specification are described in a progressive manner. For same or similar parts in implementations, reference can be made to each other. Each implementation focuses on a difference from other implementations. In particular, the system implementations are basically similar to the method implementations, and are described simply. For related parts, refer to the descriptions in the method implementations. In the description of this specification, references to term "an implementation", "some implementations", "examples", "specific examples", or "some examples" mean that specific features, structures, materials, or characteristics described in conjunction with this implementation or example are included in at least one implementation or example of this specification. In this specification, it is unnecessary for the example representation of the above-mentioned terms to refer to the same implementation or example. Moreover, the specific features, structures, materials, or characteristics described can be combined in any one or more implementations or examples in a suitable method. In addition, a person skilled in the art can combine and associate different implementations or examples and features of the different implementations or examples described in this specification, provided that the implementations or examples and the features do not conflict with each other.

What is described above is merely one or more implementations of this specification, and is not intended to limit the one or more implementations of this specification. A person skilled in the art knows that one or more implementations of this specification can have various modifications and changes. Any modification, equivalent replacement, or improvement made in the spirit and principle of this specification shall fall within the scope of the claims of this application.

## Claims

1. A blockchain system resource management method, wherein the method comprises the following:
receiving, by a first blockchain system, a first transaction initiated by a first account, wherein the first transaction is used to call a bridge contract deployed in the first blockchain system, and the first transaction indicates N rollup modes and resource distribution shares corresponding to the N rollup modes;
executing, by the first blockchain system, the bridge contract based on the first transaction, to transfer a first target resource to a bridge account based on the resource distribution shares corresponding to the N rollup modes, and generate a resource distribution event, wherein the resource distribution event comprises the first account, the N rollup modes, and the resource distribution shares corresponding to the N rollup modes;
generating, by a second blockchain system, N sub-transactions based on the resource distribution event, wherein any i^{th} sub-transaction comprises the first account, an i^{th} rollup mode in the N rollup modes, and a resource distribution share corresponding to the i^{th} rollup mode; and
executing, by the second blockchain system, the i^{th} sub-transaction, to determine an i^{th} first sub-account belonging to the i^{th} rollup mode and corresponding to the first account, and deposit a second target resource in the i^{th} first sub-account based on the resource distribution share corresponding to the i^{th} rollup mode.

2. The method according to claim 1, wherein the i^{th} first sub-account is obtained by performing derivation calculation based on the first account and the i^{th} rollup mode.

3. The method according to claim 1, wherein the depositing the second target resource to the i^{th} first sub-account based on the resource distribution share corresponding to the i^{th} rollup mode specifically comprises the following: transferring the second target resource to the i^{th} first sub-account from a bridge sub-account belonging to the i^{th} rollup mode and corresponding to the bridge account.

4. The method according to claim 1, wherein a state trie corresponding to a world state of the second blockchain system comprises M sub-state tries corresponding to M rollup modes, and M is not less than N; and the executing, by the second blockchain system, the i^{th} sub-transaction further implements the following: querying whether the i^{th} first sub-account exists in a sub-state trie corresponding to the i^{th} rollup mode; and in response to that the i^{th} first sub-account does not exist, registering the i^{th} first sub-account in the sub-state trie corresponding to the i^{th} rollup mode.

5. The method according to claim 1, wherein the method further comprises the following:
receiving, by the second blockchain system, a second transaction initiated by the first account, wherein the second transaction indicates a resource transfer share and a first rollup mode;
executing, by the second blockchain system, the second transaction, to determine a second sub-account belonging to the first rollup mode and corresponding to the first account, and transfer, based on the resource transfer share, a second target resource from the second sub-account to a bridge sub-account belonging to the first rollup mode and corresponding to the bridge account;
sending, by the second blockchain system, a third transaction to the first blockchain system, wherein the third transaction is used to call a first method function in a rollup contract deployed in the first blockchain system, and the third transaction comprises the first account and the resource transfer share; and
executing, by the first blockchain system, the first method function based on the third transaction, to transfer a first target resource from the bridge account to the first account based on the resource transfer share.

6. The method according to claim 5, wherein the third transaction further comprises a batch number of a third packaged transaction batch to which the second transaction belongs in the second blockchain system, and a transaction number of the second transaction in the third batch; and the executing, by the first blockchain system, the first method function based on the third transaction specifically implements the following: determining, based on the batch number, whether the third batch has entered a finality state; in response to that the third batch has entered a finality state, querying, based on the transaction number, whether the third batch comprises the second transaction corresponding to the third transaction; and in response to that the third batch comprises the second transaction corresponding to the third transaction, transferring the first target resource from the bridge account to the first account based on the resource transfer share.

7. The method according to claim 5, wherein the transferring the second target resource from the second sub-account based on the resource transfer share comprises the following: transferring the second target resource from the second sub-account to the bridge sub-account belonging to the first rollup mode based on the resource transfer share.

8. The method according to any one according to claims 1 to 7, wherein the method further comprises the following:
receiving, by the first blockchain system, a fourth transaction, wherein the fourth transaction is used to call a second method function in the rollup contract deployed in the first blockchain system, and the fourth transaction comprises registration information corresponding to a to-be-registered second rollup mode;
executing, by the first blockchain system, the second method function based on the fourth transaction, to perform a first upgrade operation on the rollup contract and the bridge contract based on the registration information, and generate a rollup registration event, wherein the rollup registration event comprises at least a part of registration information in the registration information; and
performing, by the second blockchain system, a second upgrade operation on an infrastructure of the second blockchain system based on the rollup registration event by using at least the part of registration information, wherein the first blockchain system after the first upgrade operation and the second blockchain system after the second upgrade operation support the second rollup mode to implement rollup.

9. The method according to claim 8, wherein the method further comprises the following:
receiving, by the first blockchain system, a fifth transaction, wherein the fifth transaction is used to call a third method function in the rollup contract deployed in the first blockchain system, and the fifth transaction requests to terminate the second rollup mode;
executing, by the first blockchain system, the third method function based on the fifth transaction, to generate a rollup termination event, and perform a third upgrade operation on the rollup contract and the bridge contract based on the registration information of the second rollup mode; and
performing, by the second blockchain system, a fourth upgrade operation on the infrastructure of the second blockchain system based on the rollup termination event, wherein the first blockchain system after the third upgrade operation and the second blockchain system after the fourth upgrade operation do not support the second rollup mode to implement rollup.

10. The method according to claim 9, wherein the method further comprises the following:
generating, by the second blockchain system, a sixth transaction based on the rollup termination event; and
executing, by the second blockchain system, the sixth transaction, to transfer a second target resource held by any first target sub-account belonging to the second rollup mode to a second target sub-account belonging to a third rollup mode, wherein the first target sub-account and the second target sub-account correspond to a same target account registered in the first blockchain system.

11. A blockchain system resource management method, wherein the method is performed by a first blockchain system, a bridge contract is deployed in the first blockchain system, and the method comprises the following:
receiving a first transaction initiated by a first account, wherein the first transaction is used to call the bridge contract, and the first transaction indicates N rollup modes and resource distribution shares corresponding to the N rollup modes; and
executing the bridge contract based on the first transaction, to transfer a first target resource to a bridge account based on the resource distribution shares corresponding to the N rollup modes, and generate a resource distribution event, wherein the resource distribution event comprises the first account, the N rollup modes, and the resource distribution shares corresponding to the N rollup modes, and the resource distribution event is used to support a second blockchain system to generate N sub-transactions; and executing any i^{th} sub-transaction, to determine an i^{th} first sub-account belonging to an i^{th} rollup mode in the N rollup modes and corresponding to the first account, and deposit a second target resource in the i^{th} first sub-account based on the resource distribution share corresponding to the i^{th} rollup mode.

12. A blockchain system resource management method, wherein the method is performed by a second blockchain system, and the method comprises the following:
obtaining a resource distribution event from a first blockchain system, wherein a bridge contract is deployed in the first blockchain system, the resource distribution event is generated by the first blockchain system by executing the bridge contract based on a first transaction, the first transaction is initiated by a first account, and the first transaction indicates N rollup modes and resource distribution shares corresponding to the N rollup modes;
generating N sub-transactions based on the resource distribution event, wherein any i^{th} sub-transaction comprises the first account, an i^{th} rollup mode in the N rollup modes, and a resource distribution share corresponding to the i^{th} rollup mode; and
executing the i^{th} sub-transaction, to determine an i^{th} first sub-account belonging to the i^{th} rollup mode and corresponding to the first account, and deposit a second target resource in the i^{th} first sub-account based on the resource distribution share corresponding to the i^{th} rollup mode.

13. A blockchain node in a first blockchain system, wherein a bridge contract is deployed in the first blockchain system, and the blockchain node comprises:
a transaction receiving unit, configured to receive a first transaction initiated by a first account, wherein the first transaction is used to call the bridge contract, and the first transaction indicates N rollup modes and resource distribution shares corresponding to the N rollup modes; and
a transaction execution unit, configured to execute the bridge contract based on the first transaction, to transfer a first target resource to a bridge account based on the resource distribution shares corresponding to the N rollup modes, and generate a resource distribution event, wherein the resource distribution event comprises the first account, the N rollup modes, and the resource distribution shares corresponding to the N rollup modes, and the resource distribution event is used to support a second blockchain system to generate N sub-transactions; and executing any i^{th} sub-transaction, to determine an i^{th} first sub-account belonging to an i^{th} rollup mode in the N rollup modes and corresponding to the first account, and deposit a second target resource in the i^{th} first sub-account based on the resource distribution share corresponding to the i^{th} rollup mode.

14. A second blockchain system, comprising:
a relayer, configured to obtain a resource distribution event from a first blockchain system, wherein a bridge contract is deployed in the first blockchain system, the resource distribution event is generated by the first blockchain system by executing the bridge contract based on a first transaction, the first transaction is initiated by a first account, and the first transaction indicates N rollup modes and resource distribution shares corresponding to the N rollup modes, wherein
the relayer is further configured to generate N sub-transactions based on the resource distribution event, wherein any i^{th} sub-transaction comprises the first account, an i^{th} rollup mode in the N rollup modes, and a resource distribution share corresponding to the i^{th} rollup mode; and
a sequencer, configured to execute the i^{th} sub-transaction, to determine an i^{th} first sub-account belonging to the i^{th} rollup mode and corresponding to the first account, and deposit a second target resource in the i^{th} first sub-account based on the resource distribution share corresponding to the i^{th} rollup mode.
